Europäisches Patentamt

European Patent Office

Office européen des brevets

(11) Numéro de publication : **0 436 713 B1**

(12) # FASCICULE DE BREVET EUROPEEN

(45) Date de publication du fascicule du brevet :
**17.03.93 Bulletin 93/11**

(51) Int. Cl.⁵ : **C01B 33/34**, B01J 29/04

(21) Numéro de dépôt : **90912575.9**

(22) Date de dépôt : **01.08.90**

(86) Numéro de dépôt international :
**PCT/FR90/00583**

(87) Numéro de publication internationale :
**WO 91/01940 21.02.91 Gazette 91/05**

(54) SYNTHESE DE ZEOLITES GALLOSILICATE A STRUCTURE FAUJASITE.

(30) Priorité : **02.08.89 FR 8910425**

(43) Date de publication de la demande :
**17.07.91 Bulletin 91/29**

(45) Mention de la délivrance du brevet :
**17.03.93 Bulletin 93/11**

(84) Etats contractants désignés :
**AT BE CH DE DK ES FR GB IT LI LU NL SE**

(56) Documents cités :
**FR-A- 1 563 559**
**US-A- 3 431 219**
**US-A- 4 803 060**

(73) Titulaire : **SOCIETE NATIONALE ELF AQUITAINE (PRODUCTION)**
**Tour Elf, 2, Place de la Coupole, La Défense 6**
**F-92400 Courbevoie (FR)**

(72) Inventeur : **DELPRATO, François**
**21, rue du Haut-Point**
**F-68400 Riedisheim (FR)**
Inventeur : **GUTH, Jean-Louis**
**59, rue Bellevue**
**F-68200 Brunstatt (FR)**
Inventeur : **ZIVKOV, Catherine**
**55, lotissement du Brunat**
**F-40180 Narosse (FR)**

(74) Mandataire : **Boillot, Marc**
**SOCIETE NATIONALE ELF AQUITAINE**
**Division Propriété Industrielle Tour Elf**
**F-92078 Paris la Défense Cédex 45 (FR)**

EP 0 436 713 B1

## Description

Les zéolithes sont des tectosilicates cristallisés. Les structures sont constituées par des assemblages de tétraèdres $TO_4$ formant une charpente tridimensionnelle par la mise en commun des atomes d'oxygène. Dans les zéolithes du type gallosilicate T représente le silicium tétravalent ainsi que le gallium trivalent. La charpente tridimensionnelle précitée présente des cavités et canaux qui possèdent des dimensions moléculaires et accueillent les cations compensant le déficit de charge lié à la présence du gallium trivalent dans les tétraèdres $TO_4$, lesdits cations étant généralement échangeables.

D'une manière générale, la composition des zéolithes peut être représentée par la formule brute $(M_{2/n}O, Y_2O_3, xZO_2)$ à l'état déshydraté et calciné. Dans cette formule Z et Y désignent respectivement les éléments tétravalents et trivalents des tétraèdres $TO_4$, M représente un élément électropositif de valence n tel qu'un métal alcalin ou alcalinoterreux et constitue le cation de compensation et x est un nombre pouvant varier de 2 à théoriquement l'infini auquel cas la zéolithe est une silice.

Chaque type de zéolithe possède une structure microporeuse distincte. La variation des dimensions et formes des micropores d'un type à l'autre, entraîne des changements dans les propriétés adsorbantes. Seules les molécules ayant certaines dimensions et formes sont capables d'entrer dans les pores d'une zéolithe particulière. En raison de ces caractéristiques remarquables les zéolithes conviennent tout particulièrement pour la purification ou la séparation de mélanges gazeux ou liquides comme, par exemple, la séparation d'hydrocarbures par adsorption sélective.

La composition chimique, avec en particulier la nature des éléments présents dans les tétraèdres $TO_4$ et la nature des cations de compensation échangeables, est également un facteur important intervenant dans la sélectivité de l'adsorption et surtout dans les propriétés catalytiques de ces produits. Ils sont utilisés comme catalyseurs ou supports de catalyseurs dans le craquage, le reformage et la modification d'hydrocarbures ainsi que dans l'élaboration de nombreuses molécules.

De nombreuses zéolithes existent dans la nature, ce sont des aluminosilicates dont les disponibilités et les propriétés ne répondent pas toujours aux exigences des applications industrielles. De ce fait, la recherche de produits ayant des propriétés nouvelles a conduit à la synthèse d'une grande variété de zéolithes parmi lesquelles on peut signaler la zéolithe A (US-A-2882243), la zéolithe X (US-A-2882244), la zéolithe Y (US-A-3130007).

Les zéolithes à charpente gallosilicate sont aussi assez nombreuses et l'on peut signaler notamment la zéolithe de type ZSM-5 au gallium (EP-A-0266825), la zéolithe de type ZSM-11 au gallium (EP-A-0223888) et bien sûr les zéolithes de type faujasite au gallium (US-A-4803060 et US-A-3431219).

Les zéolithes de la famille structurale de la faujasite sont caractérisées par une structure de charpente tridimensionnelle qui peut être décrite à partir de l'assemblage de modules appelés cube-octaèdres. Chacun de ces modules est constitué de 24 tétraèdres contenant les éléments Si et Ga dans notre cas et pontés par l'oxygène selon le principe décrit plus haut. Dans le cube-octaèdre, les tétraèdres sont liés de manière à former huit cycles à six tétraèdres et six cycles à quatre tétraèdres.

Chaque cube-octaèdre est relié en coordinance tétraédrique, à travers quatre cycles à six tétraèdres, à quatre cube-octaèdres voisins.

Il est commode, pour montrer les relations qui unissent les différents membres de la famille structurale, de considérer des plans structuraux dans lesquels les cube-octaèdres sont disposés aux sommets d'un réseau plan d'hexagones. Chaque cube-octaèdre est aussi relié à trois voisins dans le plan structural.

La quatrième direction de liaison est dirigée alternativement de part et d'autre du plan structural et permet de relier les cube-octaèdres entre plans structuraux voisins et parallèles.

Tous les solides appartenant à la famille structurale de la faujasite possèdent des canaux interconnectés d'environ 0,8 nm de diamètre. Ainsi la faujasite est une zéolithe à charpente aluminosilicate dont la structure correspond à l'empilement de trois plans structuraux distincts, ABC correspondant à une structure de symétrie cubique.

On peut obtenir, par synthèse à partir d'un gel gallosilicate de sodium des composés de la même structure que la faujasite. On peut se reporter aux citations US-A-3431219 et US-A-4803060, qui décrivent la synthèse de zéolithes de type faujasite à charpente gallosilicate dont le rapport Si/Ga est compris entre 1 et 3.

Des rapports Si/Ga supérieurs ne peuvent pas être obtenus par synthèse.

Le procédé général de synthèse des zéolithes à charpente gallosilicate appartenant à la famille structurale de la faujasite consiste en une cristallisation hydrothermale de gels gallosilicates sodiques de compositions particulières et renfermant un agent structurant consistant en un cation métallique.

Plus précisément un tel procédé consiste à réaliser tout d'abord un mélange réactionnel ayant un pH supérieur à 10 et renfermant de l'eau, une source de silicium tétravalent, une source de gallium trivalent, une source d'ions hydroxydes sous la forme d'une base forte, une source de cations métalliques $M^{n+}$, n étant la

valence de M, de manière à obtenir un gel gallosilicate ayant la composition voulue pour permettre sa cristallisation en un composé de la famille structurale de la faujasite, puis à maintenir le gel obtenu, directement ou après murissement préalable, à une température au plus égale à 150°C et sous une pression au moins égale à la pression autogène du mélange constitué par ledit gel pendant une durée suffisante pour effectuer la cristallisation de ce gel.

Comme indiqué plus haut, un tel procédé ne permet pas de synthétiser des zéolithes à charpente gallosilicate ayant la structure de symétrie cubique de la faujasite et un rapport Si/Ga supérieur à 3.

On a maintenant trouvé que certaines molécules organiques, appartenant au groupe des cycles et macrocycles carbonés contenant des hétéroatomes choisis parmi l'oxygène, l'azote et le silicium ont la propriété d'orienter la cristallisation des gels gallosilicates vers des zéolithes de la famille structurale de la faujasite caractérisées par des rapports Si/Ga pouvant être supérieurs à 3. On obtient, quelles que soient la taille et la symétrie du cycle ou macrocycle, une zéolithe présentant une structure cubique.

D'autre part, le cycle ou macrocycle apporte un effet stabilisant important, qui permet de diminuer la concentration des ions hydroxydes dans le milieu de synthèse, ce qui a pour effet l'obtention d'un rapport Si/Ga plus élevé et une amélioration substantielle du rendement.

L'invention a donc pour objet un procédé de préparation de zéolithes à charpente gallosilicate appartenant à la famille structurale de la faujasite et présentant un rapport Si/Ga supérieur à 1 et pouvant dépasser 3, ledit procédé étant du type dans lequel on réalise tout d'abord un mélange réactionnel ayant un pH supérieur à 10 et renfermant de l'eau, une source de silicium tétravalent, une source de gallium trivalent, une source d'ions hydroxydes sous la forme d'une base forte et un agent structurant ST de manière à obtenir un gel gallosilicate, ayant la composition voulue pour permettre sa cristallisation en un composé de la famille structurale de la faujasite, puis on maintient le gel obtenu, éventuellement après murissement préalable, à une température au plus égale à 150°C et sous une pression au moins égale à la pression autogène du mélange constitué par ledit gel pendant une durée suffisante pour effectuer la cristallisation de ce gel en un précurseur de la zéolithe consistant en la zéolithe emprisonnant l'agent structurant ST dans ses cavités et l'on soumet ledit précurseur à une calcination pour détruire l'agent structurant et produire la zéolithe, et il se caractérise en ce que l'agent structurant ST consiste en au moins un composé choisi parmi les cycles et macrocycles carbonés dont le cycle renferme au moins six atomes et contient des hétéroatomes choisis parmi l'oxygène, l'azote et le silicium.

Avantageusement la quantité d'agent structurant ST présente dans le mélange réactionnel destiné à former le gel est telle que le rapport molaire ST : Ga$^{III}$ aille de 0,1 à 4, ledit rapport allant de préférence de 0,1 à 1 et tout particulièrement de 0,2 à 0,5.

En particulier, les ingrédients constituant le mélange réactionnel donnant naissance au gel gallosilicate sont utilisés de telle sorte que ledit gel ait, en termes de rapports molaires, la composition suivante :

|  | Intervalles avantageux | Intervalles préférés |
|---|---|---|
| $Si^{IV} : Ga^{III}$ | 2 à 20 | 4 à 10 |
| $OH^- : Ga^{III}$ | 2 à 12 | 3 à 10 |
| $ST : Ga^{III}$ | 0,1 à 4 | 0,1 à 1 |
| $H_2O : Ga^{III}$ | 40 à 200 | 50 à 150 |

Les agents structurants ST utilisables dans le procédé selon l'invention peuvent être avantageusement choisis parmi les cycles et macrocycles carbonés dont le cycle renferme au moins six atomes et contient des atomes d'oxygène comme hétéroatomes. En particulier l'agent structurant consiste en un ou plusieurs éthers couronnes dont le cycle renferme 12 à 18 atomes, parmi lesquels on peut citer les composés suivants :

1,4,7,10-tétraoxacyclododécane
(éthercouronne "12-crown-4")
1,4,7,10,13-pentaoxacyclopentadécane
(éthercouronne "15-crown-5")
1,4,7,10,13,16-hexaoxacyclooctadécane
(éthercouronne "18-crown-6")

L'utilisation d'agents structurants selon l'invention conduit à l'obtention de zéolithes ayant la structure de symétrie cubique de la faujasite.

Parmi les sources de silicium tétravalent Si$^{IV}$ utilisables dans la préparation du mélange réactionnel, destiné à former le gel gallosilicate, on peut citer les silices solides finement divisées sous forme d'hydrogels, d'aérogels ou de suspensions colloïdales, les silicates hydrosolubles tels que les silicates alcalins comme le silicate de sodium, les esters siliciques hydrolysables tels que les orthosilicates de tétraalcoyles de formule $Si(OR)_4$ dans laquelle R désigne un alcoyle en $C_1$ à $C_4$ tel que méthyle et éthyle.

La source de silicium est mise en oeuvre sous la forme d'une solution aqueuse vraie, cas des silicates hydrosolubles, ou bien d'une suspension aqueuse qui peut être colloidale, cas des silices finement divisées.

Conviennent comme sources de gallium trivalent $Ga^{III}$, les sels de gallium tels que sulfate, nitrate, chlorure, fluorure, les oxydes et hydroxyoxydes de gallium, les gallates et notamment les gallates alcalins tels que le gallate de sodium ainsi que différents esters.

Il est également possible d'utiliser des sources contenant les éléments silicium et gallium associés telles que, par exemple, des verres ou des co-gels. Les sources des éléments silicium et gallium peuvent être engagées sous la forme de fluides ou de solides pulvérulents, mais également sous la forme d'agglomérats tels que, par exemple, pastilles ou extrudés qui peuvent être transformés en zéolithes sans modification de la forme.

La source d'ions hydroxydes est choisie parmi les bases fortes avantageusement minérales, notamment hydroxydes des métaux alcalins du groupe IA de la Classification Périodique des Eléments et hydroxydes des métaux alcalinoterreux Ca, Sr et Ba, la préférence allant à la soude.

Le mélange réactionnel destiné à former le gel gallosilicate peut encore renfermer des cations $M^{n+}$ d'au moins un métal M, de valence n, autre que les métaux dont les hydroxydes sont des bases fortes, par exemple argent, en quantité globale telle que le rapport molaire $M^{n+}:Ga^{III}$ soit au plus égal à 0,4 et de préférence au plus égal à 0,3. Lesdits cations $M^{n+}$ sont introduits dans ledit mélange réactionnel sous la forme de sels tels que sulfates, nitrates, chlorures ou acétates ou bien encore sous forme d'oxydes.

Le mélange des ingrédients constituant le mélange réactionnel destiné à former le gel de gallosilicate peut être réalisé dans un ordre quelconque.

Avantageusement on effectue ledit mélange en préparant tout d'abord, à température ambiante, une solution aqueuse basique renfermant une base forte, l'agent structurant ST et les cations $M^{n+}$ s'ils sont utilisés, puis en incorporant à cette solution une solution aqueuse de la source de gallium trivalent et une solution aqueuse ou une suspension, colloïdale ou non, de la source de silicium tétravalent. Le pH du mélange réactionnel, dont la valeur est supérieure à 10, est de préférence proche de 13,5. Avant de procéder à la cristallisation du gel, on peut ajouter au milieu réactionnel destiné à former ledit gel, des germes de cristallisation en quantité allant avantageusement de 0,1 % à 10 % en poids du milieu réactionnel.

Les germes peuvent être produits soit par broyage d'une zéolithe de type faujasite au gallium, c'est-à-dire de même nature que la phase cristalline à produire. En l'absence d'ajout de germes, il est avantageux de soumettre le gel de gallosilicate, formé à partir du mélange réactionnel, à un murissement, dans une enceinte fermée, à une température inférieure à la température de cristallisation pendant une durée pouvant aller d'environ 6 heures à environ 6 jours. Ledit murissement peut être réalisé en statique ou sous agitation. La cristallisation du gel de gallosilicate, avec ou sans germe, s'effectue en chauffant le mélange réactionnel à une température au plus égale à 150°C et de préférence allant de 90°C à 120°C et sous une pression correspondant au moins à la pression autogène du mélange réactionnel formant le gel. La durée du chauffage nécessaire à la cristallisation dépend de la composition du gel et de la température de cristallisation. Elle se situe généralement entre 2 heures et 20 jours.

Les cristaux obtenus, désignés par précurseurs de la zéolithe et consistant en la zéolithe emprisonnant l'agent structurant et l'eau d'hydratation des cations dans ses pores et cavités, sont séparés du milieu de cristallisation par filtration, puis lavés à l'eau distillée ou désionisée jusqu'à obtenir des eaux de lavage peu basiques, c'est-à-dire dont le pH est inférieur à 9. Les cristaux lavés sont ensuite séchés en étuve à une température comprise entre 50°C et 100°C et de préférence vers 70°C.

La zéolithe est obtenue à partir des cristaux du précurseur en soumettant lesdits cristaux à une calcination, à une température supérieure à 300°C et de préférence comprise entre 400°C et 700°C pendant une durée suffisante pour éliminer l'agent structurant et l'eau d'hydratation des cations contenus dans le précurseur.

Comme indiqué précédemment, les zéolithes préparées par le procédé selon l'invention possèdent des rapports Si/Ga supérieurs à 1 et pouvant dépasser 3 et présentent une structure de symétrie cubique du type de celle de la faujasite.

La caractérisation des produits selon l'invention, à savoir les précurseurs issus de la cristallisation et les zéolithes proprement dites résultant de la calcination des précurseurs, peut se faire en utilisant les techniques suivantes :

Microscopie électronique :

Au microcospe électronique, les produits de structure cubique se présentent sous des formes compatibles avec la symétrie cubique (par exemple octaèdres réguliers).

Diagramme de diffraction des rayons X :

Ce diagramme de diffraction est obtenu au moyen d'un diffractomètre en utilisant la méthode classique des poudres avec le rayonnement $K\alpha$ du cuivre.

Un étalon interne permet de déterminer précisément les valeurs des angles $2\theta$ associés aux pics de diffraction. Les différentes distances interréticulaires ($d_{hkl}$) caractéristiques de l'échantillon, sont calculées à partir de la relation de BRAGG.

L'estimation de l'erreur de mesure $\Delta (d_{hkl})$ sur $d_{hkl}$ se calcule, en fonction de l'erreur absolue $\Delta (2\theta)$ affectée à la mesure de $2\theta$, par la relation de BRAGG.

En présence d'un étalon interne, cette erreur est minimisée et prise couramment égale à $\pm 0,05°$. L'intensité relative I/Io affectée à chaque $d_{hkl}$ est estimée à partir de la hauteur du pic de diffraction correspondant. On utilise une échelle de symboles pour caractériser cette intensité relative comme suit :

FF=très forte, F=forte, mF=moyennement forte, m=moyenne mf=moyennement faible, f=faible, ff=très faible.

Thermogramme :

Les thermogrammes réalisés sur les échantillons de produits permettent de quantifier le nombre de molécules d'agent structurant et le nombre de molécules d'eau qui sont contenues dans une maille de la structure.

RMN du carbone 13 :

La RMN du carbone 13 en polarisation croisée avec rotation à l'angle magique réalisée sur des échantillons du précurseur permet de confirmer la présence de l'agent structurant dans les cavités du produit.

Détermination du rapport Si:Ga

Elle peut être réalisée en faisant appel à l'une des techniques suivantes :
- analyse chimique
- RMN du Silicium 29

Les zéolithes selon l'invention de type faujasite ont une structure cubique présentant une valeur du paramètre a de la maille cubique comprise entre 2,4 et 2,55 nm, on peut donner à ces zéolithes cubiques la formule suivante ramenée à une maille (assemblage de 192 tétraèdres).

$$(v\ M^{q+}_1)\ (w\ M^{n+})\left[(SiO_2)_{192-x}\ (GaO_2)_x\right]^{x-}, (zH_2O)$$

avec dans cette formule $M^{q+}_1$ désignant un cation q-valent d'un métal du groupe I A de la Classification Périodique des Eléments (q=1) ou d'un métal alcalinoterreux choisi parmi Ca, Sr, et Ba (q=2) ou un cation monovalent renfermant de l'azote (q=1), notamment ammonium ou ammonium quaternaire, $M^{n+}$ représentant un cation métallique de valence n autre qu'un cation $M^{q+}_1$, x, z, w et v étant des nombres tels que

$38 < x \leqq 96$, $z \geqq O$ selon l'état d'hydratation de la zéolithe (z=O pour une zéolithe complètement anhydre), $O < v \leqq x_q$ et $O \leqq w \leqq x_n$ avec $qv + wn \geqq x$.

Le tableau I ci-après représente le diagramme de diffraction des rayons X caractéristique des zéolithes cubiques du type faujasite après calcination des produits à 500°C pendant 4 heures.

Dans la colonne des $d_{hkl}$ on a donné les valeurs moyennes des distances interréticulaires. Chacune de ces valeurs doit être affectée de l'erreur de mesure $\Delta (d_{hkl})$ comprise entre $\pm 0,1$ et $\pm 0,004$.

Les variations qui peuvent être observées par rapport à ces valeurs moyennes sont essentiellement liées à la nature des cations de compensation et au rapport Si/Ga de la zéolithe. Les mêmes remarques s'appliquent aux intensités relatives I/Io.

TABLEAU I

| $2\theta$ (degrés) | $d_{hkl}$ | $(10^{-1}$ nm$)$ | I/Io |
|---|---|---|---|
| 6,17 | 14,30 | ± 0,1 | FF |
| 10,08 | 8,77 | | mF |
| 11,86 | 7,46 | | mF |
| 15,62 | 5,67 | ± 0,025 | F |
| 18,64 | 4,756 | | mF |
| 20,29 | 4,373 | | mF |
| 22,72 | 3,912 | | f |
| 23,57 | 3,770 | | F |
| 24,96 | 3,564 | | ff |
| 25,72 | 3,462 | | f |
| 26,94 | 3,308 | | F |
| 27,69 | 3,219 | ± 0,004 | f |
| 29,52 | 3,024 | | mf |
| 30,61 | 2,919 | | mF |

Les précurseurs de zéolithes qui sont produits lors de l'étape de cristallisation du procédé selon l'invention et dont la calcination conduit aux zéolithes dont les formules ont été définies plus haut, sont des gallosilicates cristallins présentant un rapport Si:Ga supérieur à 1 et pouvant dépasser 3, qui ont la structure cubique de la faujasite correspondant à un diagramme de diffraction des rayons X comparable à celui donné dans le tableau II et qui possèdent des cavités emprisonnant des molécules de structurant ST qui sont des cycles ou des macrocycles carbonés dont le cycle renferme au moins six atomes et contient des hétéroatomes choisis parmi l'oxygène, l'azote et le silicium.

## TABLEAU II

| 2θ (degrés) | $d_{hkl}$ ($10^{-1}$ nm) | I/Io |
|---|---|---|
| 6,20 | 14,24 ± 0,1 | FF |
| 10,09 | 8,76 | mF |
| 11,89 | 7,44 | F |
| 15,64 | 5,66 ± 0,025 | F |
| 18,69 | 4,745 | m |
| 20,32 | 4,366 | mF |
| 22,75 | 3,904 | f |
| 23,61 | 3,764 | mF |
| 24,99 | 3,560 | ff |
| 25,72 | 3,461 | f |
| 26,95 | 3,303 | F |
| 27,72 | 3,215 ± 0,004 | ff |
| 29,545 | 3,021 | mf |
| 30,645 | 2,915 | mf |

Les précurseurs présentant la structure de symétrie cubique de la faujasite peuvent être représentés par une formule qui, ramenée à une maille de la structure cubique, s'écrit comme suit

$$(v \; M_1^{q+}) \; (w \; Mn+) \left[ (SiO_2)_{192-x} \; (GaO_2)_x \right] \; x^- \; (p \; ST) \; (z \; H_2O)$$

et dans laquelle $M_1^{q+}$, $M^{n+}$, x, v, w et z ont les significations données précédemment, p est un nombre tel que $6 < p < 10$ et ST représente au moins un cycle ou macrocycle carboné dont le cycle renferme au moins six atomes et contient des hétéroatomes choisis parmi l'oxygène, l'azote et le silicium.

Les cycles et macrocycles parmi lesquels est choisi l'agent structurant ST sont avantageusement des cycles et macrocycles carbonés dont le cycle renferme au moins six atomes et contient des atomes d'oxygène comme hétéroatomes.

En particulier, ledit agent structurant consiste en un ou plusieurs éthers-couronnes dont le cycle renferme 12 à 18 atomes et contient au moins 4 atomes d'oxygène.

Les zéolithes obtenues par le procédé selon l'invention sont utilisables dans les mêmes types d'application que les zéolithes de structure similaire et de rapport Si:Ga comparable ou inférieur préparées par des méthodes voisines ou différentes.

Ainsi les zéolithes obtenues selon l'invention conviennent comme adsorbant pour effectuer l'adsorption sélective de molécules dont les dimensions sont inférieures à 0,8 nm ou encore, après avoir été soumises à des réactions d'échange avec des cations divers, comme catalyseurs ou composantes de catalyseurs utilisables dans les réactions de conversion catalytique de composés organiques et notamment de composés hydrocarbonés. Par exemple, par traitement d'échange avec des cations ammonium suivi d'une calcination on obtient la forme protonée de la zéolithe. Cette forme ainsi que celles résultant d'un traitement d'échange avec des cations de terres rares comme le lanthane sont appropriées comme catalyseurs acides pour l'hydrocraquage des charges pétrolières. Les zéolithes peuvent être également soumises à des traitements d'échange avec des cations de métaux des groupes II à VIII de la Classification Périodique pour former des produits appropriés comme catalyseurs de conversion des hydrocarbures. Pour leurs applications en tant que catalyseurs, les zéolithes modifiées par échange avec des cations leur conférant des propriétés catalytiques peuvent être utilisées seules ou sous la forme de produits composites résultant du mélange de ces zéolithes modifiées avec d'autres produits catalytiquement actifs et/ou avec une matrice amorphe telle qu'un gel de silice ou encore un gel mixte de silice et d'un autre oxyde tel que magnésie, alumine, oxyde de titane, oxyde de zirconium, ladite matrice servant à conférer, entre autres, une meilleure stabilité thermique au catalyseur. Les catalyseurs composites associant une ou plusieurs zéolithes catalytiquement actives à une matrice à base de gel de silice ou de gel mixte de silice et d'un autre oxyde sont particulièrement appropriés pour les opérations en lit mobile ou en lit fluidisé car ils peuvent être façonnés aisément, par exemple par séchage par pulvérisation d'une suspension aqueuse des ingrédients les composant, en grains ayant les dimensions requises pour ces opérations.

Les exemples suivants sont donnés à titre non limitatif pour illustrer l'invention.

Dans ces exemples, les quantités et pourcentages sont donnés en poids sauf indication contraire.

EXEMPLE 1 :

On préparait tout d'abord un gel gallosilicate en opérant comme suit dans un récipient de capacité appropriée, le contenu dudit récipient étant maintenu sous agitation pendant toute la durée de l'opération. Dans le récipient on introduisait 4,5 parties d'eau, 0,65 partie de soude NaOH et, après dissolution de la soude, 0,7 partie d'éther couronne "18-crown-6". Après dissolution totale de l'éther couronne, on ajoutait alors au contenu du récipient 0,5 partie d'oxyde de gallium et chauffait légèrement le mélange réactionnel pour dissoudre complètement l'oxyde de gallium. Après retour à la température ambiante, on introduisait alors dans le récipient 4 parties d'une suspension colloidale de silice renfermant 40% de $SiO_2$ et 60% d'eau.

On obtenait ainsi un gel de gallosilicate dont la composition molaire, rapportée à une mole de $Ga_2O_3$ était la suivante :

10 $SiO_2$; 1 $Ga_2O_3$; 3,O $Na_2O$; 1 éther-couronne; 140 $H_2O$.

Le gel obtenu était soumis à un murissement à température ambiante pendant 24 heures dans un récipient fermé.

Le gel muri était ensuite placé dans un autoclave et maintenu à 100°C dans ce dernier pendant 144 heures pour former un produit cristallisé. Les cristaux étaient séparés du milieu réactionnel par filtration, puis lavés à l'eau distillée jusqu'à faible basicité (pH inférieur à 9) des eaux de lavage et enfin séchés à environ 60°C dans une étuve.

Les cristaux séchés étaient ensuite calcinés à 400°C pendant 4 heures afin d'éliminer les molécules de l'éther couronne utilisé comme agent structurant et d'obtenir la zéolithe.

Avant calcination, le produit cristallisé présente un diagramme de diffraction des rayons X comparable à celui donné dans le tableau II.

La formule trouvée pour ledit produit, ramenée à une maille de la structure, qui est de symétrie cubique, s'écrit

$$45,2\ Na^+ \left[ (SiO_2)_{146,9}\ (GaO_2)_{45,1} \right]_{45,1-}\ 7("18\text{-}crown\text{-}6")\ 135\ H_2O$$

La zéolithe formée par calcination du produit ci-dessus présente un diagramme de diffraction des rayons X comparable à celui du tableau I caractéristique des faujasites cubiques calcinées.

La formule trouvée pour cette zéolithe, ramenée à une maille de la structure cubique, s'écrit à l'état anhydre

$$45,2\ Na^+ \left[ (SiO_2)_{146,9}\ (GaO_2)_{45,1} \right]_{45,1-}$$

On observe un très léger excès de charge positive par rapport à la neutralité.

On retrouve dans la zéolithe environ 65% de la silice engagée dans l'opération.

EXEMPLE 2 :

On opérait comme indiqué dans l'exemple 1 avec toutefois les variations suivantes des conditions opéra-

toires:

- préparation du gel : 0,50 partie de soude,

    0,45 partie d'oxyde de gallium

- murissement    :20°C pendant 24 heures
- cristallisation  :110°C pendant 360 heures
- calcination    :500°C pendant 6 heures.

Le gel gallosilicate, avant murissement, avait la composition molaire suivante rapportée à 1 mole de $Ga_2O_3$.

11 $SiO_2$; 1 $Ga_2O_3$; 3,0 $Na_2O$; 1(18-crown-6); 155 $H_2O$

Avant calcination, le produit cristallisé présente un diagramme de diffraction des rayons X comparable à celui donné dans le tableau II.

La formule trouvée pour ledit produit, ramenée à une maille de la structure, qui est de symétrie cubique, sécrit

$$43,5 \; Na^+ \left[ (SiO_2)_{148,7} \quad (GaO_2)_{43,3} \right]^{43,3^-} 7,2(18\text{-crown-6}) \; 133 \; H_2O$$

La zéolithe formée par calcination du produit ci-dessus présente un diagramme de diffraction des rayons X comparable à celui du tableau I.

La formule trouvée pour cette zéolithe, ramenée à une maille de la structure hexagonale, s'écrit à l'état anhydre.

$$43,5 \; Na^+ \left[ (SiO_2)_{148,7} \quad (GaO_2)_{43,3} \right]^{43,3^-}$$

On retrouve dans la charpente de la zéolithe environ 70% de la silice engagée dans l'opération.

EXEMPLE 3 :

On opérait comme indiqué dans l'exemple 1 avec toutefois les variations suivantes dans les conditions opératoires :

- préparation du gel      :    1 partie d'éther couronne

    "15-crown-5" et 0,7 partie de

    soude NaOH
- murissement        :    20°C pendant   24   heures
- cristallisation      :    115°C pendant  192 heures
- calcination        :    400°C pendant  4   heures

Le gel gallosilicate, avant murissement, avait la composition molaire suivante rapportée à 1 mole de $Ga_2O_3$ :

10 $SiO_2$ ; 1 $Ga_2O_3$ ; 3,3 $Na_2O$ ; 1,7 "15-crown-5" ; 140$H_2O$

Avant la calcination, le produit cristallisé présente un diagramme de diffraction des rayons X comparable à celui donné dans le tableau II.

La formule trouvée pour ledit produit, ramenée à une maille de la structure, qui est de symétrie cubique, s'écrit

$$50,8\ Na^+ \left[ (SiO_2)_{141,3}\quad (GaO_2)_{50,7} \right]^{50,7^-}\ 8,2("15\text{-}crown\text{-}5")139H_2O$$

La zéolithe formée par calcination du produit ci-dessus présente un diagramme de diffraction des rayons X comparable à celui du tableau I.

La formule trouvée pour cette zéolithe, ramenée à une maille de la structure cubique, s'écrit à l'état anhydre

$$50,8\ Na^+ \left[ (SiO_2)_{141,3}\quad (GaO_2)_{50,7} \right]^{50,7^-}$$

On retrouve dans la charpente de la zéolithe environ 65% de la silice engagée dans l'opération.

EXEMPLE 4 :

On opérait comme indiqué dans l'exemple 1 avec toutefois les variations suivantes dans les conditions opératoires

- préparation du gel : 0,5 partie d'éther couronne "15-crown-5" et
  0,5 partie d'éther couronne "18-crown-6"
  0,65 partie de soude NaOH
- murissement : 25°C pendant 24 heures
- cristallisation : 110°C pendant 168 heures
- calcination : 450°C pendant 4 heures.

Le gel gallosilicate, avant murissement, avait la composition molaire suivante rapportée à 1 mole de $Ga_2O_3$

$10\ SiO_2$; $1\ Ga_2O_3$ ; $3,0\ Na_2O$ ; $0,7$ ("18-crown-6") ;
$0,85$ ("15-crown-5") ; $140\ H_2O$

Avant calcination, le produit cristallisé présente un diagramme de diffraction des rayons X comparable à celui donné dans le tableau II. La formule trouvée pour ledit produit, ramenée à une maille de la structure, qui est de symétrique cubique, s'écrit

$$46,7Na^+ \left[ (SiO_2)_{145,5}\quad (GaO_2)_{46,5} \right]^{46,5-} \left( \begin{matrix} 4,3\ ("15\text{-}crown\text{-}5") \\ 4,1\ ("18\text{-}crown\text{-}6") \end{matrix} \right) 134H_2O$$

La zéolithe formée par calcination du produit ci-dessus présente un diagramme de diffraction des rayons X comparable à celui du tableau I caractéristique des faujasites cubiques calcinées.

La formule trouvée pour cette zéolithe, ramenée à une maille de la structure cubique, s'écrit à l'état anhydre.

$$46,7\ Na^+ \left[ (SiO_2)_{145,5}\quad (GaO_2)_{46,5} \right]^{46,5-}$$

**Revendications**

1. Procédé de préparation de zéolithes à charpente gallosilicate appartenant à la famille structurale de la faujasite et présentant un rapport Si:Ga supérieur à 1 et pouvant dépasser 3, ledit procédé étant du type dans lequel on réalise tout d'abord un mélange réactionnel ayant un pH supérieur à 10 et renfermant de l'eau, une source de silicium tétravalent, une source de gallium trivalent, une source d'ions hydroxydes sous forme d'une base forte et un agent structurant ST de manière à produire un gel gallosilicate ayant la composition voulue pour permettre sa cristallisation en un composé de la famille structurale de la faujasite, puis on maintient le gel obtenu à une température au plus égale à 150°C et sous une pression au moins égale à la pression autogène du mélange constitué par ledit gel pendant une durée suffisante pour effectuer la cristallisation de ce gel en un précurseur de la zéolithe consistant en la zéolithe emprisonnant l'agent structurant ST dans ses cavités et l'on soumet ledit précurseur à une calcination pour détruire ledit agent structurant et produire la zéolithe, et se caractérisant en ce que l'agent structurant ST consiste en au moins un composé appartenant au groupe formé par les cycles et macrocycles carbonés dont le cycle renferme au moins six atomes et contient des hétéroatomes choisis parmi l'oxygène, l'azote et le silicium.

2. Procédé selon la revendication 1, caractérisé en ce que la quantité d'agent structurant ST dans le mélange réactionnel destiné à former le gel est telle que le rapport molaire $ST:Ga^{III}$ soit situé de 0,1 à 4, ledit rapport molaire allant de préférence de 0,1 à 1.

3. Procédé selon la revendication 1 ou 2, caractérisé en ce que les ingrédients constituant le mélange réactionnel donnant naissance au gel gallosilicate sont utilisés en quantités telles que ledit gel ait, en termes de rapports molaires, une composition telle que $Si^{IV} : Ga^{III} = 2$ à 20, $OH^- : Ga^{III} = 2$ à 12, $ST : Ga^{III} = 0,1$ à 4 et $H_2O : Ga^{III} = 40$ à 200.

4. Procédé selon la revendication 3, caractérisé en ce que ladite composition est telle que $Si^{IV} : Ga^{III} = 4$ à 10, $OH^- : Ga^{III} = 3$ à 10, $ST : Ga^{III} = 0,1$ à 1 et $H_2O : Ga^{III} = 50$ et 150.

5. Procédé selon l'une des revendications 1 à 4, caractérisé en ce que l'agent structurant ST est choisi parmi les cycles et macrocycles carbonés dont le cycle renferme au moins six atomes et contient des atomes d'oxygène comme hétéroatomes, ledit agent structurant consistant en particulier en au moins un composé choisi parmi les éthers couronnes dont le cycle renferme 12 à 18 atomes et contient au moins 4 atomes d'oxygène.

6. Procédé selon l'une des revendications 1 à 5, caractérisé en ce que la source de silicium tétravalent est choisie dans le groupe constitué par les silices finement divisées sous la forme d'hydrogels, d'aérogels ou de suspensions colloïdales, les silicates hydrosolubles tels que les silicates alcalins comme le silicate de sodium, et les esters siliciques hydrolysables tels que les orthosilicates de tétraalcoyles de formule $Si(OR)_4$ dans laquelle R désigne un radical alcoyle en $C_1$ à $C_4$.

7. Procédé selon l'une des revendications 1 à 6, caractérisé en ce que la source de gallium trivalent est choisie dans le groupe constitué par les sels de gallium, les oxydes et hydroxyoxydes de gallium, les gallates et notamment les gallates alcalins tel que le gallate de sodium, les esters de gallium, les verres et co-gels de silicium et gallium.

8. Procédé selon l'une des revendications 1 à 7, caractérisé en ce que la source d'ions hydroxydes est choisie dans le groupe formé par les hydroxydes des métaux alcalins du groupe IA de la Classification Périodique des Eléments et les hydroxydes des métaux alcalino-terreux Ca, Sr et Ba.

9. Procédé selon l'une des revendications 1 à 8, caractérisé en ce que le mélange réactionnel renferme des cations $M^{n+}$ d'au moins un métal M, de valence n, autre que les métaux dont les hydroxydes sont des bases fortes, en quantité globale telle que le rapport molaire $M^{n+}:Ga^{III}$ dans ledit mélange soit au plus égal à 0,4 et de préférence au plus égal à 0,3.

10. Procédé selon l'une des revendications 1 à 9, caractérisé en ce qu'avant de procéder à la cristallisation du gel, on ajoute au milieu réactionnel destiné à former ledit gel des germes de cristallisation en quantité allant de 0,1% à 10% en poids dudit milieu réactionnel, lesdits germes de cristallisation étant notamment

EP 0 436 713 B1

produits par broyage d'une zéolithe au gallium de même nature que la phase cristalline à produire.

11. Procédé selon l'une des revendications 1 à 10, caractérisé en ce qu'avant de 'procéder à la cristallisation du gel, on soumet ledit gel à un murissement, dans une enceinte fermée, à une température inférieure à la température de cristallisation pendant une durée allant d'environ 6 heures à environ 6 jours.

12. Procédé selon l'une des revendications 1 à 11, caractérisé en ce que la cristallisation du gel gallosilicate, avec ou sans germe, est réalisée en maintenant ledit gel à une température allant de 90°C à 120°C pendant une durée comprise entre 2 heures et 20 jours.

13. Procédé selon l'une des revendications 1 à 12, caractérisé en ce que la calcination du précurseur de la zéolithe est réalisée à une température supérieure à 300°C et de préférence comprise entre 400°C et 700°C.

14. Précurseurs de zéolithes à charpente de gallosilicate appartenant à la famille structurale de la faujasite consistant en gallosilicates ayant un rapport Si:Ga supérieur à 1 et pouvant dépasser 3 et qui, d'une part, présentent une structure de symétrie cubique comparable à celle de la faujasite et d'autre part, possèdent des cavités ou des canaux emprisonnant des molécules ST d'au moins un agent structurant, caractérisés en ce que les molécules ST appartiennent au groupe formé par les cycles et macrocycles carbonés dont le cycle renferme au moins six atomes et contient des hétéroatomes choisis parmi l'oxygène, l'azote et le silicium.

15. Précurseurs selon la revendication 14, caractérisés en ce que les molécules d'agent structurant ST sont choisies dans le groupe formé par les cycles et macrocycles carbonés dont le cycle renferme au moins six atomes et contient des atomes d'oxygène comme hétéroatomes et en particulier dans le groupe formé par les éthers couronnes dont le cycle renferme 12 à 18 atomes et contient au moins 4 atomes d'oxygène.

16. Précurseurs selon la revendication 14 ou 15, présentant une structure de symétrie cubique comparable à celle de la faujasite, caractérisés en ce qu'ils présentent un diagramme de diffraction des rayons X comparable à celui défini dans le tableau II de la description et sont représentés par une formule qui, ramenée à une maille de la structure cubique, s'écrit

$$(v \ M_1^{q+}) \ (w \ M^{n+}) \left[ (SiO_2)_{192-x} \quad (GaO_2)_x \right]^{x-} (pST) \quad (zH_2O)$$

et dans laquelle $M_1^{q+}$ désigne un cation q-valent d'un métal du groupe IA de la Classification Périodique des Eléments (q=1) ou d'un métal alcalinoterreux choisi parmi Ca, Sr et Ba (q=2) ou un cation monovalent renfermant de l'azote (q=1), notamment ammonium ou ammonium quaternaire, $M^{n+}$ représente un cation d'au moins un métal M de valence n autre qu'un cation $M_1^{q+}$, x, z, v et w sont des nombres tels que 38 <x≦ 96, z ≧O et dépendant de l'état d'hydratation du précurseur,
O ≦v<$\frac{x}{q}$ et O ≦w≦$\frac{x}{n}$ avec qv + wn ≧ x,
p est un nombre tel que 6 < p <10 et ST représente l'agent structurant.

17. Application des précurseurs selon l'une des revendications 14 à 16 à la production, par calcination desdits précurseurs, de zéolithes à charpente gallosilicate appartenant à la famille structurale de la faujasite et présentant un rapport Si:Ga supérieur à 1 et pouvant dépasser 3, lesdites zéolithes ayant une structure de symétrie cubique comparable à celle de la faujasite et étant notamment utilisables, directement ou après échange de cations, comme adsorbants ou comme composants de catalyseurs.

18. Application selon la revendication 17 à la production de zéolithes à charpente gallosilicate ayant la structure de symétrie cubique de la faujasite par calcination des précurseurs selon la revendication 16, les zéolithes obtenues ayant une valeur du paramètre a de la maille cubique comprise entre 2,4 et 2,55 nm, présentant un diagramme de diffraction des rayons X comparable à celui dans le tableau I de la description et répondant à une formule qui, ramenée à une maille de la structure cubique, s'écrit

$$(v\ M_1^{q+})\ (w\ M^{n+})\ \left[ (SiO_2)_{192-x} \quad (GaO_2)_x \right]^{x-} \ (z\ H_2O)$$

et dans laquelle $M_1^{q+}$, $M^{n+}$, x, z, v et w ont les significations données à la revendication 16.

**Patentansprüche**

1. Verfahren zur Herstellung von Zeolithen mit Gallosilicatgitter, die der Strukturfamilie von Faujasit angehören und ein Verhältnis Si:Ga aufweisen, das größer ist als 1 und 3 übersteigen kann, wobei bei diesem Verfahren zunächst ein Reaktionsgemisch mit einem pH-Wert über 10 hergestellt wird, das Wasser, eine quelle vierwertigen Siliciums, eine Quelle dreiwertigen Galliums, eine Quelle von Hydroxidionen in Form einer starken Base und ein strukturbildendes Mittel ST dergestalt enthält, daß ein Gallosilicatgel mit einer zur Kristallisation in eine Verbindung der Strukturfamilie des Faujasits geeigneten Zusammensetzung erzeugt wird und wobei anschließend das erhaltene Gel bei einer Temperatur von höchstens 150 °C und unter einem Druck von mindestens dem Eigendruck des aus diesem Gel bestehenden Gemisches über eine Zeitdauer, die ausreichend ist, um die Kristallisation des Gels in eine Vorstufe des Zeolithen durchzuführen, die aus dem Zeolithen besteht, in dessen Hohlräumen das strukturbildende Mittel ST eingeschlossen ist, und wobei diese Vorstufe einer Calcinierung unterzogen wird, um dieses strukturbildende Mittel zu zuerstören und den Zeolithen herzustellen,
dadurch **gekennzeichnet,** daß
das strukturbildende Mittel ST aus mindestens einer Verbindung besteht, die der Gruppe der kohlenstoffhaltigen Cyclen und Macrocyclen angehört, wobei der Cyclus mindestens 6 Atome aufweist und unter Sauerstoff, Stickstoff und Silicium ausgewählte Heteroatome enthält.

2. Verfahren nach Anspruch 1,
dadurch gekennzeichnet, daß
die Menge des strukturbildenden Mittels ST im Reaktionsgemisch zur Bildung des Gels dergestalt ist, daß das molare Verhältnis $ST:Ga^{III}$ zwischen 0,1 und 4 liegt, wobei dieses molare Verhältnis vorzugsweise zwischen 0,1 und 1 liegt.

3. Verfahren nach Anspruch 1 oder 2,
dadurch gekennzeichnet, daß
die Bestandteile, aus denen das Reaktionsgemisch zur Bildung des Gallosilicatgels besteht, in solchen Mengen verwendet werden, daß das Gel, ausgedrückt in molaren Verhältnissen, die folgende Zusammensetzung besitzt: $Si^{IV}:Ga^{III} = 2$ bis 20, $OH^-:Ga^{III} = 2$ bis 12, $ST:Ga^{III} = 0,1$ bis 4, $H_2O:Ga^{III} = 40$ bis 200.

4. Verfahren nach Anspruch 3,
dadurch gekennzeichnet, daß
die folgende Zusammensetzung vorliegt: $Si^{IV}:Ga^{III} = 4$ bis 10, $OH^-:Ga^{III} = 3$ bis 10, $ST:Ga^{III} = 0,1$ bis 1 und $H_2O:Ga^{III} = 50$ bis 150.

5. Verfahren nach einem der Ansprüche 1 bis 4,
dadurch gekennzeichnet, daß
das strukturbildende Mittel ST ausgewählt wird unter kohlenstoffhaltigen Cyclen und Macrocyclen, wobei der Cyclus mindestens 6 Atome aufweist und Sauerstoffatome als Heteroatome enthält, wobei dieses strukturbildende Mittel insbesondere aus mindestens einer Verbindung besteht, die ausgewählt wird unter Kronenethern, deren Cyclus 12 bis 18 Atome aufweist und mindestens 4 Sauerstoffatome enthält.

6. Verfahren nach einem der Ansprüche 1 bis 5,
dadurch gekennzeichnet, daß
die Quelle vierwertigen Siliciums ausgewählt wird unter feinverteilten Kieselsäuren in Form von Hydrogelen, Aerogelen oder kolloidalen Suspensionen, wasserlöslichen Silicaten, wie Alkalisil-icaten, beispielsweise Natriumsilicat und hydrolysierbaren Siliciumestern, wie Tetraalkoxy-Orthosilicaten der Formel $Si(OR)_4$, worin R einen Alkylrest mit 1 bis 4 Kohlenstoffatomen bedeutet.

7. Verfahren nach einem der Ansprüche 1 bis 6,
dadurch gekennzeichnet, daß
die Quelle dreiwertigen Galliums ausgewählt wird unter Galliumsalzen, Galliumoxiden und -hydroxiden, Gallaten, insbesondere Alkaligallaten wie Natriumgallat, Galliumestern, Gläsern und Co-Gelen von Silicium und Gallium.

8. Verfahren nach einem der Ansprüche 1 bis 7,
dadurch gekennzeichnet, daß
die Quelle der Hydroxidionen ausgewählt wird unter den Hydroxiden der Alkalimetalle der Gruppe IA des Periodensystems der Elemente und den Hydroxiden der Alkalimetalle Ca, Sr und Ba.

9. Verfahren nach einem der Ansprüche 1 bis 8,
dadurch gekennzeichnet, daß
das Reaktionsgemisch $M^{n+}$-Kationen von mindestens einem Metall M der Wertigkeit n in einer solchen Gesamtmenge enthält, daß das molare Verhältnis $M^{n+}:Ga^{III}$ im Gemisch höchstens gleich 0,4 und vorzugsweise höchstens gleich 0,3 ist, wobei dieses Metall kein solches ist, dessen Hydroxide starke Basen sind.

10. Verfahren nach einem der Ansprüche 1 bis 9,
dadurch gekennzeichnet, daß
vor der Kristallisation des Gels dem Reaktionsgemisch zur Bildung des Gels Kristallisationskeime in einer Menge zugesetzt werden, die 0,1 bis 10 Masse-% des Reaktionsgemisches beträgt, wobei diese Kristallisationskeime insbesondere durch Zerkleinern eines Galliumzeoliths der gleichen Art wie die herzustellende kristalline Phase hergestellt sind.

11. Verfahren nach einem der Ansprüche 1 bis 10,
dadurch gekennzeichnet, daß
vor der Kristallisation des Gels das Gel in einem geschlossenen Behälter bei einer Temperatur unterhalb der Kristallisationstemperatur über eine Zeitdauer von ungefähr 6 Stunden bis ungefähr 6 Tage einer Alterung unterzogen wird.

12. Verfahren nach einem der Ansprüche 1 bis 11,
dadurch gekennzeichnet, daß
die Kristallisation des Gallosilicatgels mit oder ohne Kristallisationskeime durchgeführt wird, indem das Gel bei einer Temperatur von 90 °C bis 120 °C über eine Zeitdauer zwischen 2 Stunden und 20 Tagen gehalten wird.

13. Verfahren nach einem der Ansprüche 1 bis 12,
dadurch gekennzeichnet, daß
die Calcinierung der Vorstufe des Zeolithen bei einer Temperatur über 300 °C und vorzugsweise zwischen 400 °C und 700 °C durchgeführt wird.

14. Vorstufen von Zeolithen mit Gallosilicatgitter, die der Strukturfamilie des Faujasits angehören und aus Gallosilicaten bestehen, die ein Verhältnis Si:Ga aufweisen, das größer als 1 ist und 3 übersteigen kann, die einerseits eine Struktur kubischer Symmetrie aufweisen, die der des Faujasits vergleichbar ist, und andererseits Höhlen oder Kanäle besitzen, die die ST-Moleküle von mindestens einem strukturbildenden Mittel einschließen,
dadurch gekennzeichnet, daß
die ST-Moleküle kohlenstoffhaltigen Cyclen und Macrocyclen angehören, deren Cyclus mindestens 6 Atome aufweist und unter Sauerstoff, Stickstoff und Silicium ausgewählte Heteroatome enthält.

15. Vorstufen nach Anspruch 14,
dadurch gekennzeichnet, daß
die Moleküle des strukturbildenden Mittels ST ausgewählt werden unter kohlenstoffhaltigen Cyclen und Macrocyclen, deren Cyclus mindestens 6 Atome aufweist und Sauerstoffatome als Heteroatome besitzt, und insbesondere unter Kronenethern, deren Cyclus 12 bis 18 Atome aufweist und mindestens 4 Sauerstoffatome enthält.

16. Vorstufen nach Anspruch 14 oder 15, die eine der des Faujasits vergleichbare Struktur kubischer Symmetrie aufweisen,

dadurch gekennzeichnet, daß

sie ein Röntgenbeugungsdiagramm besitzen, das dem in Tabelle 2 der Beschreibung angegebenen vergleichbar ist und durch die folgende, auf ein Gitter kubischer Struktur bezogene Formel dargestellt werden :

$$(v\ M_1^{q+})\ (w\ M^{n+})\ \left[ (SiO_2)_{192-x}\ (GaO_2)_x \right]^{x-} (pST)\ (zH_2O)$$

worin $M_1^{q+}$ ein q-wertiges Kation eines Metalls der Gruppe IA des Periodensystems der Elemente (q = 1) oder eines unter Ca, Sr und Ba (q = 2) ausgewählten Erdalkalimetalls oder ein stickstoffhaltiges einwertiges (q = 1) Kation, insbesondere Ammonium oder quaternäres Ammonium darstellt, $M^{n+}$ ein Kation von mindestens einem Metall der Wertigkeit n darstellt, das vom Kation $M_1^{q+}$ verschieden ist, x, z, v und w solche Zahlen sind, daß $38 < x \leqq 96$, $z \geqq 0$, und die vom Hydratationszustand der Vorstufe abhängen, und wobei $0 \leqq v < x/q$ und $0 \leqq w \leqq x/n$ mit $qv + wn \geqq x$, wobei p eine solche Zahl ist, daß $6 < p < 10$ und ST das strukturbildende Mittel darstellt.

17. Verwendung der Vorstufen nach einem der Ansprüche 14 bis 16 zur Herstellung von Zeolithen mit Galliumsilicatgitter, die der Strukturfamilie von Faujasit angehören und ein Verhältnis Si:Ga aufweisen, das größer ist als 1 und 3 übersteigen kann, wobei diese Zeolithe eine der des Faujasits vergleichbare Struktur kubischer Symmetrie besitzen und insbesondere, direkt oder nach Kationenaustausch, als Absorbentien oder Kätalysatorkomponenten verwendbar sind, durch Calcinierung dieser Vorstufen.

18. Verwendung nach Anspruch 17 zur Herstellung von Zeolithen mit Gallosilicatgitter mit der Struktur kubischer Symmetrie von Faujasit durch Calcinieren der Vorstufen nach Anspruch 16, wobei die erhaltenen Zeolithe einen Wert des Parameters a des kubischen Gitters zwischen 2,4 und 2,55 nm besitzen, ein dem der Tabelle 1 der Beschreibung vergleichbares Röntgenbeugungssdiagramm aufweisen und die folgende, auf ein Gitter kubischer Struktur bezogene Formel besitzen:

$$(v\ M_1^{q+})\ (w\ M^{n+})\ \left[ (SiO_2)_{192-x}\ (GaO_2)_x \right]^{x-}\ (z\ H_2O)$$

worin $M_1^{q+}$, $M^{n+}$, x, z, v und w die in Anspruch 16 angegebenen Bedeutungen besitzen.

## Claims

1. Method of preparing zeolites having a gallosilicate structure belonging to the faujasite structural family, and having an Si:Ga ratio greater than 1 and which may exceed 3, the said method being of the type in which first of all there is produced a reactive mixture having a pH greater than 10 and containing water, a tetravalent silicon source, a trivalent gallium source, a source of hydroxide ions in the form of a strong base and an ST structuring agent such as to produce a gallosilicate gel having the required composition in order to enable crystallisation to take place in a compound of the faujasite structural family, and the gel obtained is then maintained at a temperature of 150° at the most and at a pressure at least equal to the autogenous pressure of the mixture constituted by the said gel for a period of time sufficient for crystallising of this gel to take place in a precursor of the zeolite consisting of capturing the ST structuring agent in its cavities, and the said precursor is subjected to calcination in order to destroy the said structuring agent and produce the zeolite, characterised in that the ST structuring agent comprises at least one compound belonging to the group formed by the carbon ring and macrorings, of which the ring includes at least six atoms and contains heteroatoms selected from amongst oxygen, nitrogen and silicon.

2. Method according to Claim 1, characterised in that the quantity of ST structuring agent in the reactive mixture intended to form the gel is such that the molar ratio ST:Ga[III] is between 0.1 and 4, the said molar ratio preferably being between 0.1 and 1.

3. Method according to Claims 1 or 2, characterised in that the constituents of the reactive mixture giving rise to production of the gallosilicate gel are used in quantities such that in terms of molar ratios, the said gel has a composition such that $Si_{IV}: Ga^{III} = 2$ to 20, $OH^-:Ga^{III} = 2$ to 12, $ST : Ga^{III} = 0.1$ to 4 and $H_2O : Ga^{III} = 40$ to 200.

4. Method according to Claim 3, characterised in that the said composition is such that $Si_{IV}: Ga^{III} = 4$ to 10, $OH^-:Ga^{III} = 3$ to 10, $ST : Ga^{III} = 0.1$ to 1 and $H_2O : Ga^{III} = 50$ to 150.

5. Method according to any one of Claims 1 to 4, characterised in that the ST structuring agent is selected from amongst the carbon rings and macrocycles of which the ring includes at least six atoms and contains oxygen atoms as heteroatoms, the said structuring agent comprising in particular at least one compound selected from amongst the cyclic ethers of which the ring includes 12 to 18 atoms and contains at least 4 oxygen atoms.

6. Method according to any one of Claims 1 to 5, characterised in that the tetravalent silicon source is selected from the group consisting of finely divided silicas in the form of hydrogels, aerogels or colloidal suspensions, hydrosoluble silicates of the alkaline silicate type such as sodium silicate, and hydrolysable silicic esters such as tetraalkyl orthosilicates having the formula $Si(OR)_4$ in which R designates a $C_1$ to $C_4$ alkyl radical.

7. Method according to any one of Claims 1 to 6, characterised in that the trivalent gallium source is selected from the group constituted by gallium salts, gallium oxides and hydroxides, gallates, and in particular alkaline gallates such as sodium gallate, gallium esters, glasses and co-gels of silicon and gallium.

8. Method according to any one of Claims 1 to 7, characterised in that the source of hydroxide ions is selected from the group formed by the hydroxides of alkaline metals of group IA of the periodic Classification of Elements, and the hydroxides of Ca, Sr and Ba alkaline-earth metals.

9. Method according to any one of Claims 1 to 8, characterised in that the reactive mixture contains cations $M^{n+}$ of at least one metal M having a valency n, other than the metals of which the hydroxides are strong bases, of an overall quantity such that the molar ratio $M^{n+}:Ga^{III}$ in the said mixture is at the most 0.4 and preferably at the most 0.3.

10. Method according to any one of Claims 1 to 9, characterised in that before crystallisation of the gel is begun, crystallisation seeds of a quantity ranging from 0.1 to 10 weight % of the reactive agent intended to form the said gel are added to this agent, the said crystallisation seeds being produced in particular by crushing a gallium zeolite of the same nature as the crystalline phase to be produced.

11. Method according to any one of Claims 1 to 10, characterised in that before crystallisation of the gel is begun, it is matured in a sealed container at a temperature lower than the crystallisation temperature, for a length of time of between approximately 6 hours and approximately 6 days.

12. Method according to any one of Claims 1 to 11, characterised in that the gallosilicate gel, with or without seeds, is crystallised by maintaining this gel at a temperature of between 90 C and 120 C for a length of time of between 2 hours and 20 days.

13. Method according to any one of Claims 1 to 12 characterised in that the zeolite precursor is calcined at a temperature higher than 300 C and preferably between 400 C and 700 C.

14. Zeolite precursors having a gallosilicate structure belonging to the faujasite structural family, consisting of gallosilicates having an Si:Ga ratio greater than 1 and which may exceed 3, which on the one hand have a symmetrical cubic structure comparable to that of faujasite, and on the other hand have cavities or channels which capture the ST molecules of at least one structuring agent, characterised in that the ST molecules belong to a group formed by the carbon rings and macrorings of which the ring contains at least six atoms and contains heteroatoms selected from amongst oxygen, nitrogen and silicon.

15. Precursors according to Claim 14, characterised in that the molecules of the structuring agent ST are selected from the group formed by the carbonated rings and macrorings, of which the ring contains at least six atoms and contains oxygen atoms as heteroatoms, and in particular from the group formed by the cyclic ethers of which the ring contains 12 to 18 atoms and contains at least 4 oxygen atoms.

16. Precursors according to Claims 14 or 15, having a symmetrical cubic structure comparable to that of faujasite, characterised in that they have an X-ray diffraction diagram comparable to that defined in table II of the description and are represented by a formula which, relative to a link of the cubic structure, is written:

$$(v\ M^{q+})_1\ (w\ M^{n+})\ \left[(SiO_2)_{192-x}\quad (GaO_2)_x\right]^{x-}(pST)\quad (zH_2O)$$

and in which $M^{q+}$ designates a q-valent cation of a metal of group IA of the Periodic Classification of Elements (q = 1) or of an alkaline earth metal selected from amongst Ca, Sr and Ba (q = 2) or a monovalent cation containing nitrogen (q = 1), in particular ammonium or quaternary ammonium, $M^{n+}$ represents a cation of at least one metal M having a valency n other than a cation $M^{q+}$, x, z, v and w are numbers such that 38 <x 96, z 0 and depending on the state of hydration of the precursor, 0 v< - $\underline{X}$ and 0 w $\underline{X}$ with qv + wn x, p is a number such that 6 < p < 10 and ST represents the structuring agent.

17. Application of the precursors according to any one of Claims 14 to 16, to the production, by calcination of the said precursors, of zeolites having a gallosilicate structure belonging to the faujasite structural family and having an Si:Ga ratio greater than 1 and which may exceed 3, the said zeolites having a symmetrical cubic structure comparable to that of faujasite and which can be used in particular, directly or after exchanging cations, as adsorbents or as catalyst components.

18. Application according to Claim 17 to the production of zeolites having a gallosilicate structure having the symmetrical cubic structure of faujasite, by calcination of the precursors according to Claim 16, the zeolites obtained having a cubic cross-linking parameter value a of between 2.4 and 2.55 nm, and an X-ray diffraction diagram comparable to that in table I of the description, and in accordance with a formula which, relative to a link of the cubic structure, is written:

$$(v\ M^{q+})_1\ (w\ M^{n+})\ \left[(SiO_2)_{192-x}\quad (GaO_2)_x\right]^{x-}\quad (z\ H_2O)$$

and in which $M^{q+}$, $M^{n+}$, x, z, v and w have the meanings given in Claim 16.